# EUROPÄISCHE PATENTSCHRIFT

(11) **EP 0 304 091 B1**
(45) Veröffentlichungstag und Bekanntmachung des Hinweises auf die Patenterteilung: **19.05.1993**
(21) Anmeldenummer: 88113536.2
(22) Anmeldetag: 20.08.1988
(51) Int. Cl.: F16F 15/03

(54) **Dämpfungseinrichtung**
Damping device
Dispositif d'amortissement

(30) Priorität: 21.08.1987 DE 3727959
(43) Veröffentlichungstag der Anmeldung: 22.02.1989
(73) Patentinhaber: Autoliv-Kolb GmbH & Co., D-85203 Dachau (DE)
(72) Erfinder: Notar, Walter, D-8044 Unterschliessheim (DE)
(74) Vertreter: Zinnecker, Armin, Dipl.-Ing.

(56) Entgegenhaltungen:
- EP-A- 0 186 325
- DE-A- 3 434 897
- DE-B- 1 030 625
- DE-B- 1 296 252
- DE-U- 8 503 541
- US-A- 2 635 483
- US-A- 3 538 469
- US-A- 4 200 003

## Beschreibung

Die Erfindung betrifft eine Dämpfungsvorrichtung für rotatorische und translatorische Bewegungen, die aus einem Dämpfungsglied und einem zu dämpfenden Teil besteht, mit einem einen geschlossenen Kreislauf ermöglichenden Hohlkörper, in dem sich eine magnetisierbare Flüssigkeit befindet, und mit magnetischen Mitteln, durch die ein Teil der Dämpfungseinrichtung an die magnetisierbare Flüssigkeit angekoppelt ist.

Aus der DE 25 40 107 A1 ist eine Dämpfungsvorrichtung bekannt, die einen mit viskoser Flüssigkeit gefüllten, abgeschlossenen Raum aufweist, in welchem als bewegliches Dämpfungsglied eine magnetisierbare Weicheisenkugel vorgesehen ist, die mit magnetischen Mitteln an die zu dämpfende Einheit angekoppelt ist. Die Kugel soll so in der Mitte des Rohres schweben, daß sich zwischen Innenwandung des Rohres und der Kugel ein kreisförmiger Spalt bildet. Weil das Magnetfeld, in dem sich die Kugel befindet, das Gravitationsfeld der Erde ausgleichen muß, befindet sich die Kugel in einem äußerst labilen Gleichgewicht. Sollte es jedoch gelingen, das Magnetfeld so auszulegen, daß die Kugel tatsächlich genau mittig plaziert wäre, würde jede Winkelabweichung zur ursprünglichen Lage die Komponente der Erdanziehungskraft ändern, die es durch das Magnetfeld auszugleichen gilt, und die Kugel würde wiederum ihre mittige Lage einbüßen. In diesem Fall würde die Kugel dann an einer Stelle der Rohrwandung anliegen. Dadurch tritt jedoch Haftreibung auf, die verhindert, daß die Kugel in ihre Ruhelage zurückkehren kann.

Weiterhin ist aus der US-A-3 53 84 69 eine gattungsgemäße Dämpfungseinrichtung bekannt. Bei den vorbekannten Dämpfungsvorrichtungen ist es jedoch nicht ohne weiteres möglich, das Dämpfungsverhalten zu verändern.

Aufgabe der vorliegenden Erfindung ist es, eine gattungsgemäße Dämpfungsvorrichtung derart weiterzubilden, daß deren Dämpfungseigenschaften einfach verändert werden können.

Dies wird erfindungsgemäß dadurch erreicht, daß in dem Hohlkörper einer gattungsgemäßen Dämpfungsvorrichtung ein Thermostatventil-Element als Einrichtung zur Drosselung vorgesehen ist. Hierdurch kann in einfacher Weise eine temperaturbedingte Viskositätsschwankung der Flüssigkeit ausgeglichen werden.

In einer Ausführungsform der Erfindung wird nur eine kleine Menge magnetisierbarer Flüssigkeit verwendet, die von einer Flüssigkeit umgeben ist, die nicht mit der magnetisierbaren Flüssigkeit mischbar ist. Diese kleine Menge magnetisierbarer Flüssigkeit wirkt unter dem Einfluß der magnetischen Kräfte gewissermaßen wie ein Kolben, der, im Gegensatz zu einem festen Kolben, ohne Haftreibung über die Innenwandung des Hohlkörpers gleitet und die Sperrflüssigkeit im Kreislauf bewegt. Die magnetischen Kräfte können dabei entweder durch einen Permanentmagneten oder durch einen Elektromagneten erzeugt werden.

Um höhere Bindungskräfte zwischen Dämpfungsglied und zu dämpfenden Glied zu erzeugen, werden in einer weiteren Ausgestaltung der Erfindung die magnetischen Feldlinien auf die magnetisierbare Flüssigkeit fokusiert. Das läßt sich beispielsweise dadurch erreichen, daß beiderseits eines Permanentmagneten Polschuhe angebracht werden, die den Polkörper jeweils überragen.

Die Erfindung wird anhand der Zeichnung im folgenden näher erläutert. Es zeigt:
- Fig. 1:: eine Dämpfungsvorrichtung nach dem Stand der Technik für die Dämpfung einer rotatorischen Bewegung, bei der der Hohlkörper vollkommen mit magnetisierbarer Flüssigkeit ausgefüllt ist,
- Fig. 2:: einen Schnitt nach der Linie AA der Fig. 1,
- Fig. 3:: eine erfindungsgemäße Dämpfungsvorrichtung für die Dämpfung einer rotatorischen Bewegung, bei der eine Sperrflüssigkeit verwendet wird,
- Fig. 4:: einen Schnitt entlang der Linie BB in Fig. 3 und
- Fig. 5:: eine Dämpfungsvorrichtung zur Dämpfung eines Pendels, an dem ein Beschleunigungssensor eines Kraftfahrzeugsicherheitssystems angebracht ist.

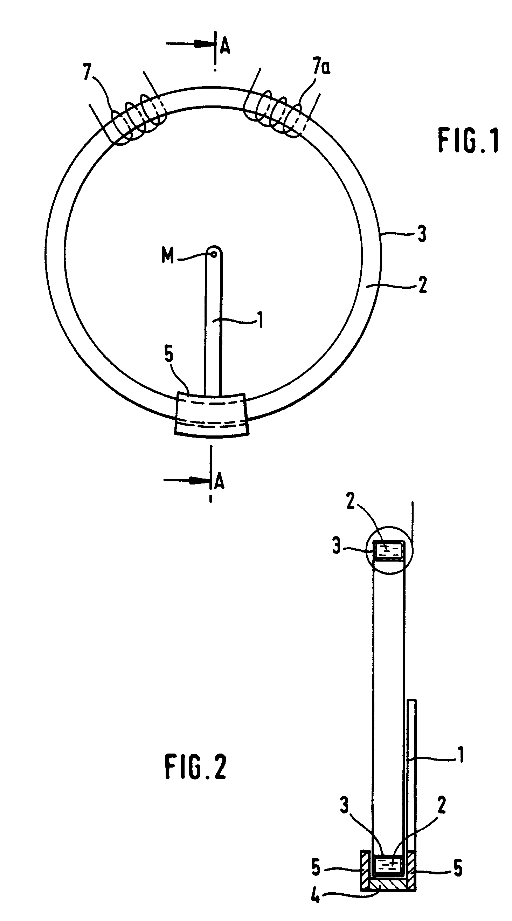

In der Ausführungsform entsprechend dem Stand der Technik nach Fig. 1 und Fig. 2 ist das Pendel 1 um den Punkt M drehbar gelagert. Der Hohlkörper, der nach der Erfindung die magnetisierbare Flüssigkeit 2 aufnimmt, ist hier als geschlossener Ring 3 mit rechteckigem Querschnitt ausgebildet. Am freien Ende des Pendels 1 ist ein Magnet 4 befestigt, der an zwei gegenüberliegenden Seiten mit Polschuhen 5 versehen ist. Der Magnet 4 und die Polschuhe 5 bilden um den Hohlkörper 3 eine Rinne, mit rechteckigem Querschnitt. Auf der gegenüberliegenden Seite ist am Hohlkörper 3 eine elektrische Spule 7 angebracht.

Wirkt auf das Pendel 1 eine Kraft, so bewegt es sich um seinen Mittelpunkt M. Durch die magnetische Koppelung wird die magnetisierbare Flüssigkeit 2 im Inneren des Hohlkörpers 3 mitbewegt. Die Stärke der Dämpfung hängt dabei ab von der Viskosität der Flüssigkeit 2, dem Querschnitt des Hohlkörpers 3 und dem Magnetfeld der Spule 7. Durch die Bewegung der Flüssigkeit 2 wird in der Spule 7a ein Signal erzeugt. Hierdurch ergibt sich die Möglichkeit einer aktiven Dämpfung, so daß z.B. bei schnellerer Bewegung des Pendels in der Spule 7 ein stärkeres Magnetfeld erzeugt wird, uns sich somit eine stärkere Dämpfung ergibt.

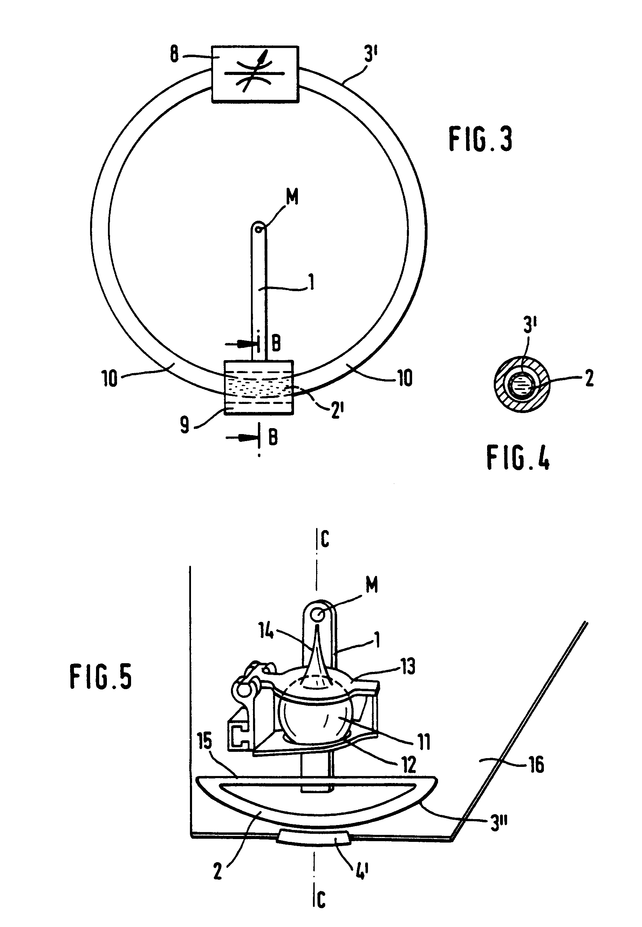

In den Fig. 3 und 4 ist ein Ausführungsbeispiel der Erfindung klargestellt. Der Hohlkörper 3' ist hier als geschlossener Ring mit rundem Querschnitt ausgebildet. Mit 8 ist ein nicht näher dargestelltes Thermostatventil bezeichnet. In dem Hohlkörper 3' befindet sich nur eine kleine Menge 2' magnetisierbarer Flüssigkeit. Durch den Ringmagneten 9 wird die magnetisierbare Flüssigkeit 2' in der Form eines Kolbens gehalten, der den Hohlkörper 3' ausfüllt. Der übrige Hohlraum des Körpers 3' ist mit einer Grenzflüssigkeit 10 ausgefüllt.

Bewegt sich nun das Pendel 1 um den Punkt M, so wird der Kolben aus magnetisierbarer Flüssigkeit 2' mitbewegt. Auch die Grenzflüssigkeit 10 wird dadurch mitbewegt. In diesem Ausführungsbeispiel wird die Dämpfung durch den Querschnitt des Hohlkörpers 3 die Viskosität der Sperrflüssigkeit 10 und durch das Thermostatventil 8 bestimmt. Sollte sich die Viskosität der Sperrflüssigkeit durch Temperaturschwankungen ändern, so wird dies durch das Thermostatventil 8 ausgeglichen, so daß die Dämpfung immer konstant bleibt.

Ein Anwendungsbeispiel des erfindungsgemäßen Gegenstandes zeigt die Fig. 5.

An einem Pendel 1, das im Drehpunkt M gelagert ist, ist ein lageunabhängiger Sensor für die Blockiereinrichtung eines Sicherheitsgurtsystemes befestigt. Bei der Beschleunigung (positiv oder negativ) eines Kraftfahrzeuges über einen bestimmten Wert hinaus, oder beim Kippen über einen bestimmten Winkel hinaus, bewegt sich die Kugel 11 aus ihrem Sitz 12 und hebt dadurch den Deckel 13, der mit seiner Spitze 14 eine Blockierung einleitet.

Unterhalb des Sensors ist am Pendel 1 ein gebogenes Rohr 3'' angebracht. Die magnetisierbare Flüssigkeit 2 füllt das Rohr 3'' vollkommen aus. Die beiden Enden des Rohres 3'' sind über das Verbindungsrohr 15 miteinander verbunden. Am Rahmen 16 der Blockiereinrichtung ist ein Permanentmagnet 4' angebracht. Die gezeigte Vorrichtung hat die Aufgabe, den Sensor den Bewegungen des Fahrzeuges gedämpft und zeitverzögert nachzuführen, so daß die Achse CC immer senkrecht zur Erdoberfläche ausgerichtet ist.

Ist die Blockiervorrichtung in der Lehne eines Kraftfahrzeuges untergebracht, so richtet sich der Sensor selbständig nach jeder Verstellung des Sitzes wieder nach dem Gravitationsfeld der Erde aus. Die Dämpfung der Verstellbewegung des Sensors kann mit der Erfindung so eingestellt werden, daß ein langsames Kippen des Fahrzeuges nicht zu einer Lageanpassung des Sensors führt, da in diesem Fall die Kugel 11 unbedingt ihren Sitz 12 verlassen muß, um eine sichere Blockierung zu gewährleisten.

## Patentansprüche

1. Dämpfungsvorrichtung für rotatorische und translatorische Bewegungen, die aus einem Dämpfungsglied und einem zu dämpfenden Teil besteht, mit einem einen geschlossenen Kreislauf ermöglichenden Hohlkörper (3), in dem sich eine magnetisierbare Flüssigkeit (2) befindet, und mit magnetischen Mitteln, (4) durch die ein Teil der Dämpfungseinrichtung an die magnetisierbare Flüssigkeit (2) angekoppelt ist,
**dadurch gekennzeichnet,**
daß in dem Hohlkörper (3) als Einrichtung zur Drosselung ein Thermostatventil-Element (8) vorgesehen ist.

2. Dämpfungsvorrichtung nach Anspruch 1, dadurch gekennzeichnet, daß sich in dem Hohlkörper (3) nur eine kleine Menge der magnetisierbaren Flüssigkeit (2') befindet, die von einem Sperrmedium (10) umgeben ist.

3. Dämpfungsvorrichtung nach Anspruch 1 oder 2, dadurch gekennzeichnet, daß das Sperrmedium (10) eine mit der magnetisierbaren Flüssigkeit (2') nicht mischbare Flüssigkeit mit einstellbarer Viskosität ist.

4. Dämpfungsvorrichtung nach einem der Ansprüche 1 bis 3, dadurch gekennzeichnet, daß die magnetische Koppelung der beiden Glieder mit Hilfe eines Permanentmagneten (9) erfolgt.

5. Dämpfungsvorrichtung nach einem der Ansprüche 1 bis 3, dadurch gekennzeichnet, daß die magnetische Koppelung der beiden Glieder mit Hilfe einer elektromagnetischen Vorrichtung erfolgt.

6. Dämpfungsvorrichtung nach Anspruch 4 oder 5, dadurch gekennzeichnet, daß Mittel zur Fokussierung der magnetischen Feldlinien auf die magnetisierbare Flüssigkeit vorhanden sind.

7. Beschleunigungssensor eines Kraftfahrzeugsicherheitssystems beinhaltend eine Dämpfungsvorrichtung gemäß einem der Ansprüche 1 bis 6 mit einer Kugel (11), die in einem Sitz (12) eines im Drehpunkt (M) gelagerten Pendels (1) angeordnet ist und bei einer Beschleunigung einen eine Blockierung einleitenden Deckel (13) hebt, wobei unterhalb der Kugel (11) am Pendel (1) ein gebogenes Rohr (3'') angeordnet ist, dessen Enden über ein Verbindungsrohr (15) miteinander verbunden sind und das mit einem Magnet (4') zusammenwirkt.

## Claims

1. Damping device for rotatory and translatory movements comprising a damping element and a damped component, with a hollow body (3) facilitating the formation of a closed circuit, in which hollow body (3) is located a magnetizable liquid (2), and with magnetic means (4) through which a part of the damping device is coupled to the magnetizable liquid (2)
**characterized in that**
a thermostat valve element (8) is provided in the hollow body (3) as a throttling device.

2. Damping device according to Claim 1, characterized in that located in the hollow body (3) is only a small quantity of magnetizable liquid (2') which is surrounded by a buffer/sealing medium (10).

3. Damping device according to Claim 1 or 2, characterized in that the buffer/sealing medium (10) is a liquid of adjustable viscosity which is immiscible with the magnetizable liquid (2').

4. Damping device according to one of Claims 1 to 3, characterized in that the magnetic coupling of the two elements is performed with the aid of a permanent magnet (9).

5. Damping device according to one of Claims 1 to 3, characterized in that the magnetic coupling of the two elements is performed with the aid of an electro-magnetic apparatus.

6. Damping device according to Claim 4 or 5, characterized in that means are provided for focusing the magnetic lines of force onto the magnetizable liquid.

7. Acceleration sensor of a motor vehicle safety system containing a damping device according to one of Claims 1 to 6 with a ball (11) arranged in a seat (12) of a pendulum supported at pivot point (M), which acceleration sensor in response to an acceleration event raises a cover (13) to initiate a blocking action, wherein below the ball (11) at the pendulum (1) is arranged a bent tube (3''), the ends of which are interconnected via a connecting tube (15) and which interacts with a magnet (4').

## Revendications

1. Dispositif d'amortissement pour mouvements rotatoires et translatoires, consistant en un élément d'amortissement et une pièce à amortir, comportant un corps creux (3) permettant de réaliser un circuit fermé dans lequel se trouve un liquide magnétisable (2), et des moyens magnétiques (4) par lesquels une partie du dispositif d'amortissement est raccordée au liquide magnétisable (2) ,
**caractérisé en ce que**
dans le corps creux (3) est prévu un élément de soupape thermostatique (8) en tant que dispositif d'étranglement.

2. Dispositif d'amortissement selon la revendication 1, caractérisé en ce qu'une petite quantité seulement du liquide magnétisable (2') se trouve dans le corps creux (3), qui est entouré d'un milieu obturant (10).

3. Dispositif d'amortissement selon les revendications 1 ou 2, caractérisé en ce que le milieu obturant (10) est un liquide de viscosité réglable qui ne se mélange pas avec le liquide magnétisable (2'),

4. Dispositif d'amortissement selon l'une des revendications 1 à 3, caractérisé en ce que le raccordement magnétique des deux éléments se fait à l'aide d'un aimant permanent (9).

5. Dispositif d'amortissement selon l'une des revendications 1 à 3, caractérisé en ce que le raccordement magnétique des deux éléments se fait à l'aide d'un dispositif électromagnétique.

6. Dispositif d'amortissement selon les revendications 4 ou 5, caractérisé en ce que des moyens sont prévus pour focaliser les lignes du champ magnétique sur le liquide magnétisable.

7. Capteur d'accélération d'un système de sécurité automobile comportant un dispositif d'amortissement selon l'une des revendications 1 à 6 avec une bille (11) qui est disposée dans un logement (12) d'un pendule (1) prévu dans le point de rotation (M) et qui, lors d'une accélération, relève un couvercle (13) qui introduit un blocage, au-dessous de la bille (11) étant disposé au pendule (1) un tube (3'') coudé dont les extrémités sont reliées entre elles par l'intermédiaire d'un tube de raccordement (15) et qui coopère avec un aimant (4').
